# EUROPÄISCHE PATENTSCHRIFT

(11) **EP 0 968 752 B1**
(45) Veröffentlichungstag und Bekanntmachung des Hinweises auf die Patenterteilung: **07.07.2004**
(21) Anmeldenummer: 99105977.5
(22) Anmeldetag: 25.03.1999
(51) Int. Cl.: B01D 53/78, B01D 53/18

(54) **Einrichtung zur Realisierung eines Flüssigkeitskreislaufes für eine Waschflüssigkeit**
Apparatus for realizing a cycle for a washing liquid
Dispositif pour réaliser un cycle pour un liquide de lavage

(30) Priorität: 30.06.1998 DE 19829161
(43) Veröffentlichungstag der Anmeldung: 05.01.2000
(73) Patentinhaber: VSS- Umwelttechnik GmbH, 53842 Troisdorf (DE); DAS-DÜNNSCHICHT ANLAGEN SYSTEME GmbH DRESDEN, D-01217 Dresden (DE); K- Kunststoffsystems GmbH, 56424 Staudt (DE)
(72) Erfinder: Reichardt, Horst, Dr., 01219 Dresden (DE); Vosen, Michael, 50859 Köln-Lövenicht (DE); Hofmann, Gerold, 01279 Dresden (DE); Roos, Christoph, 56235 Ransbach-Baumbach (DE); Merforth, Egbert, 01099 Dresden (DE)
(74) Vertreter: Schneck, Herbert, Dipl.-Phys., Dr.

(56) Entgegenhaltungen:
- EP-A- 0 801 970

## Beschreibung

Die Erfindung betrifft einen Flüssigkeitskreislauf für eine Waschflüssigkeit, der für eine Waschstrecke eines Reaktors zur Reinigung von schadstoffhaltigen Abgasen einzusetzen ist.

In dem Reaktor, vorzugsweise der Brennkammer einer Gasreinigungseinrichtung, werden toxische Schadstoffe einer Fertigungsanlage in einer Reaktion zersetzt oder in einer Oxidations- oder Redoxreaktion in feste Bestandteile oder flüchtige hydrolisierbare Gase umgewandelt. Diese Sekundärprodukte der Abgasverbrennung sind meist ebenfalls noch schädlich, weshalb das Abgas noch in einer Waschstrecke behandelt werden muß. Derartige Gasreinigungseinrichtungen und damit Reaktoren mit einer Waschstrecke werden u.a. zur Reinigung von Abgasen aus Anlagen zum Abscheiden und Abtragen durch Plasmaprozesse oder durch chemische Dampfphasenabscheidung, vorzugsweise zur Herstellung von Halbleiterschaltkreisen eingesetzt. Es ist aber auch der Einsatz des Flüssigkeitskreislaufes für andere Aufgaben der chemischen Verfahrenstechnik im Labor- oder Pilotstadium, sowie im Produktionsstadium oder bei der Lösung von Aufgaben der Biotechnik und der Umwelttechnik möglich.

In der Waschstrecke wird der heiße Gasstrom aus dem Reaktor abgekühlt, gasförmige Sekundärprodukte der Abgasverbrennung werden von der Waschflüssigkeit sorbiert, hydrolisiert und neutralisiert. Feste Stoffe, die im Reaktor oder in der Waschstrecke entstehen, werden mit der Waschflüssigkeit aus dem Gas gewaschen und an anderer Stelle des Flüssigkeitskreislaufes separiert und aus dem Flüssigkeitskreislauf entfernt (US A8889002, EP 0346893 B1).

Der mehrstufige Reinigungsprozeß des Abgases wird meist in einer Einrichtung ausgeführt, in der Reaktor und Waschstrecke zu einer konstruktiven Einheit zusammengefaßt sind (DE 4320044, EP 89110875). In einer kompletten Anlage zur Gasreinigung werden zweckmäßigerweise Reaktor und Waschstrecke sowie der Flüssigkeitskreislauf gemeinsam in einem Gestell angeordnet. In ein solches Gestell werden auch Baugruppen zur Medienversorgung und Baugruppen zur elektronischen Versorgung und Steuerung sowie pneumatische Baugruppen integriert. Derartige kompakte Gasreinigungseinrichtungen eignen sich vorzugsweise für kleine und mittlere Volumenströme bis zu 60 m³ /h.

Der Flüssigkeitskreislauf (EP 0 711 594 A, US 3 268 144 A) besteht zunächst aus einem Gefäß für die Waschflüssigkeit, der üblicherweise meist aus einem Kunststoff in Schweiß- oder Tiefziehkonstruktion hergestellt ist (EP 0801970 A1). Die Umwälzung der Waschflüssigkeit erfolgt mit einer Pumpe, häufig einer trockenlaufenden Tauchpumpe, über den Vorlauf in die Waschstrecke. Die Waschflüssigkeit fließt, meist drucklos, über den Rücklauf wieder in den Flüssigkeitsbehälter. Weitere, die Aufgabe des Flüssigkeitskreislaufes sichernde Funktionen oder Baugruppen sind: Ein Wärmetauscher zur Kühlung der Waschflüssigkeit, die Dosierung für die Laugen oder Säuren und die Frischwasserzufuhr in das Gefäß sowie Einrichtungen zur Abscheidung von festen Teilchen und Schlämmen zweckmäßigerweise innerhalb des Gefäßes. Meßwerte zur Kontrolle und Steuerung der einzelnen Funktionen und Baugruppen des Flüssigkeitskreislaufes werden durch eine Anzahl von Sensoren, wie zum Beispiel p_{H}-Sensor, Temperatur-Sensoren, Niveau-Sensoren und Leckwarnsensoren, bereitgestellt. Das Gefäß für die Waschflüssigkeit wird aus Gründen der Havariesicherung und wegen eventuellen Leckwerdens in ein Sicherheitsgefäß eingesetzt und mit notwendigen Elementen zum Handling im Havariefall, wie Leckwarn-Sensor, Niveausensor und Pumpe zum Abpumpen eventuell aus dem Gefäß ausgetretener Waschflüssigkeit, ergänzt.

Im Betrieb wird mit Hilfe der Tauchpumpe im Gefäß über den Vorlauf das Waschmittel in die Waschstrecke gepumpt und dort wirksam. Im Gefäß wird der p_{H}-Wert der Waschflüssigkeit gemessen. Der Verbrauch an Säure oder Lauge für die Prozesse in der Waschstrecke wird durch kontinuierliches oder diskontinuierliches Dosieren von Laugen, z.B. KOH oder NaOH, beim Entstehen von sauren Sekundärprodukten im Reaktor oder von Säuren, z.B. H₂SO₄, beim Entstehen von basisch wirkenden Sekundärprodukten, ausgeglichen. Kontinuierlich oder zyklisch werden aus dem Gefäß die festen Teilchen und Schlämme zusammen mit einer gewissen Menge Abwasser abgesaugt. Der durch das Absaugen eintretende Verlust an Waschflüssigkeit im Gefäß bzw. der Verbrauch zur Neutralisation in der Waschstrecke wird durch Frischwasserzufuhr und Dosieren von Chemikalien ausgeglichen.

Für den technischen Einsatz eines Flüssigkeitskreislaufes ist neben dessen effektiver Wirksamkeit vor allem dessen Betriebssicherheit von entscheidender Bedeutung. Es ist zu gewährleisten, daß die eigentliche Produktionsanlage, z.B. eine solche zur Herstellung von Halbleiterschaltkreisen, über lange Zeiten fehlerfrei arbeitet. Dazu müssen am Flüssigkeitskreislauf Servicearbeiten, wie z.B. Sichtkontrollen, Wartungsarbeiten und Reparaturen, leicht und zeiteffektiv auszuführen sein.

Ein Weg dazu ist gemäß EP 0801970 A ein modularer Aufbau des Flüssigkeitskreislaufes aus einem Wagen (z.B. einem Untergestell mit Rollen), einem offenen Sicherheitsgefäß und einem in dieses eingestellten, geschlossenen Kreislaufgefäß für die Waschflüssigkeit sowie den zusätzlich notwendigen Funktionselementen wie Absaugrohren, Überlaufrohren, Leitungen, Pumpen, Ventilen, Meßgeräten und Sensoren.

Für die Durchführung von Servicearbeiten wird der Flüssigkeitskreislauf auf Rollen herausgefahren. Ist der Flüssigkeitskreislauf an einer Schwenkeinrichtung oder Achse befestigt, kann er zu Servicezwecken aus dem Gestell herausgedreht werden.

Bestimmte Servicearbeiten am Flüssigkeitskreislauf können unter Umständen bei voller Funktion ausgeführt werden. Sind größere Reparaturen notwendig, kann es notwendig sein, die Funktion des Flüssigkeitskreislaufes zu unterbrechen und im Interesse der schnellstmöglichen Wiederherstellung der Funktion der Gasreinigungseinrichtung den Flüssigkeitskreislauf insgesamt gegen einen betriebsfähigen auszutauschen.

Im Interesse der schnellen Durchführung von Servicearbeiten am Flüssigkeitskreislauf müssen ein großer Teil der Flüssigkeitsleitungen, der Druckluftleitungen und der elektrischen Leitungen flexibel und mit Schnellkupplungen bzw. mit Schraub- oder Steckverbindern ausgeführt werden. Da zum Betrieb des Flüssigkeitskreislaufes mindestens fünf flexible Leitungen für die Flüssigkeiten und zusätzlich noch Leitungen für die Druckluft zum Betrieb der pneumatischen Ventile und für Meß- und Steuerleitungen erforderlich sind, wird der Service an dem Flüssigkeitskreislauf im herausgefahrenen oder herausgeschwenkten Zustand durch die Vielzahl der Leitungen und ihre Anordnung behindert.

Für die unter Druck stehenden Flüssigkeitsleitungen können noch zusätzliche Schwierigkeiten durch Undichtigkeiten der Schnellkupplungen und Gefährdungen beim Manipulieren auftreten. Insbesondere kann im Falle einer Havarie das offene Sicherheitsgefäß durch frei werdende aggressive Dämpfe zu Störungen Anlass geben.

Der Erfindung liegt die Aufgabe zugrunde, Mängel des Standes der Technik bekannter Flüssigkeitskreisläufe zu beseitigen. Schwierigkeiten und Gefährdungen durch unter Druck stehende Leitungen für Flüssigkeiten sind zu vermeiden. Die Anzahl flexibler Leitungen zwischen den Baugruppen der Gasreinigungseinrichtung sind zu reduzieren. Die Zugänglichkeit für Servicearbeiten ist zu verbessern.

Insgesamt ist die Betriebssicherheit des Flüssigkeitskreislaufes zu erhöhen und die Service- und Reparaturmöglichkeit zu verbessern. Auf diese Weise ist eine höhere mittlere fehlerfreie Betriebszeit der Gasreinigungseinrichtung und dadurch letztlich auch der Produktionsanlage für das Ätzen oder Beschichten von Halbleiterscheiben zu erzielen.

Die Aufgabe wird erfindungsgemäß durch eine Einrichtung zur Realisierung eines Flüssigkeitskreislaufes für eine Waschflüssigkeit nach Anspruch 1 bis 10 gelöst.

Für die Erfindung wird davon ausgegangen, daß eine Einrichtung zur Realisierung eines Flüssigkeitskreislaufes entsprechend dem Stand der Technik im Wesentlichen aus einem Gefäß für die Waschflüssigkeit, einem Sicherheitsgefäß, einer Pumpe für die Umwälzung der Waschflüssigkeit über Vorlauf und Rücklauf der Waschstrecke, einem Wärmetauscher zur Kühlung der Waschflüssigkeit, einer Dosierung der Chemikalien für den Waschprozess, einer Frischwasserzufuhr und einer Absaugung von Abwasser mit separierten festen Teilchen und Schlämme besteht.

Erfindungsgemäß ist das Gefäß für die Waschflüssigkeit als ein doppelwandiges Gefäß in Form eines Kreiszylindersegmentes ausgeführt. Die zwei Wandungen dieses Gefäßes haben auf dem größten Teil des Umfanges einen geringen Abstand in der Größenordnung von einem Zentimeter. Die oberen Stirnkanten beider Wandungen sind mit dem Deckel des Gefäßes dicht verschweißt. Der Winkel des Segmentes hat einen Wert von 60° bis etwa 90°, vorzugsweise etwa 90°, er ist damit geeignet in einem rechtwinkeligen Gestell günstig angeordnet zu werden. Die beiden Teile des doppelwandigen Gefäßes sind vorzugsweise aus Kunststoff, sie sind tiefgezogen und/oder geschweißt. Im Gegensatz zur Idealform eines Zylindersegmentes sind, vorwiegend aus technologischen Gründen, alle Kanten und Ecken gerundet. Nach dem Verschweißen resultiert ein allseitig geschlossenes Gefäß, dessen innere Wandungen den eigentlichen Behälter für die Waschflüssigkeit mit einem Volumen von beispielsweise 50 Liter bilden. Wegen der Kleinheit des Abstandes zwischen innerer und äußerer Wandung umschließen die äußeren Wandungen ein Volumen, das nur wenig größer als das des eigentlichen Gefäßes ist. Im durch die äußeren Wandungen eingehüllten Volumen kann im Havariefall die Gesamtmenge der Waschflüssigkeit verbleiben, d.h. die äußeren Wandungen übernehmen die Funktion eines Sicherheitsgefäßes bei raumsparendster Bauweise. Der Deckel des Gefäßes wird als Montageplatte für die meisten der erforderlichen Funktionselemente des Flüssigkeitskreiskreislaufes genutzt. Entweder direkt auf dem Deckel oder in den auf den Deckel aufgeschraubten, mit O - Ringen gedichteten Flanschen sind Ventile, Pumpen, festverrohrte Flüssigkeitsleitungen und Druckluftleitungen und die erforderlichen Sensoren für p_{H} - Wert, Flüssigkeitsniveau, Temperatur und Leckwarnung montiert.

Im Bereich der Ecke des Gefäßes (10), die durch die ebenen seitlichen Flächen des Zylindersegmentes gebildet wird, ist ein zylindrisches Bauteil A (26) in den Deckel (11) eingesetzt. Dieses Bauteil A (26) kann dabei in den Deckel (11) des Gefäßes (10) eingeschweißt oder mit Hilfe eines Flansches fest angeschraubt und gedichtet sein. Das Bauteil A (26) ist mit Hilfe einer Überwurfmutter (32) mit einem ebenfalls zylindrischen Bauteil B (30), welches seinerseits mit dem Gestell (1) fest verschraubt ist, mit Hilfe einer Überwurfmutter (32) zu einer Baugruppe verbunden.

In den beiden Bauteilen A und B (26,30) greifen kreiszylindrische Flächen (56,57) derart ineinander, daß sie als radiale Gleitlager für eine Drehung des Gefäßes (10) um die Drehachse (41) besagter zylindrischer Bauteile wirken. In den bzw. an den Bauteilen A und B (26,30) sind Bohrungen (60,61), Ausdrehungen (59), O - Ring - Dichtungen (58) und Anschlüsse (36 bis 40) für Flüssigkeitsleitungen derart ausgeführt, daß mehrere Flüssigkeiten, beispielsweise drei, mit Drücken bis zu 8 bar durch die besagten Bauteile geführt werden können.

Für die durch die Bauteile A und B geführten Flüssigkeiten wird es so möglich, sie im Gestell (1) und auf dem Deckel (11) in möglichst kurz und starrverlegten Leitungen zu verteilen. Lange, das Herausschwenken ermöglichende, aber die Servicearbeiten behindernde, flexible Leitungen werden also vermieden. geringen Abstand in der Größenordnung von einem Zentimeter. Die oberen Stirnkanten beider Wandungen sind mit dem Deckel des Gefäßes dicht verschweißt. Der Winkel des Segmentes hat einen Wert von 60° bis etwa 90°, vorzugsweise etwa 90°, er ist damit geeignet in einem rechtwinkeligen Gestell günstig angeordnet zu werden. Die beiden Teile des doppelwandigen Gefäßes sind vorzugsweise aus Kunststoff, sie sind tiefgezogen und/oder geschweißt. Im Gegensatz zur Idealform eines Zylindersegmentes sind, vorwiegend aus technologischen Gründen, alle Kanten und Ecken gerundet. Nach dem Verschweißen resultiert ein allseitig geschlossenes Gefäß, dessen innere Wandungen den eigentlichen Behälter für die Waschflüssigkeit mit einem Volumen von beispielsweise 50 Liter bilden. Wegen der Kleinheit des Abstandes zwischen innerer und äußerer Wandung umschließen die äußeren Wandungen ein Volumen, das nur wenig größer als das des eigentlichen Gefäßes ist. Im durch die äußeren Wandungen eingehüllten Volumen kann im Havariefall die Gesamtmenge der Waschflüssigkeit verbleiben, d.h. die äußeren Wandungen übernehmen die Funktion eines Sicherheitsgefäßes bei raumsparendster Bauweise. Der Deckel des Gefäßes wird als Montageplatte für die meisten der erforderlichen Funktionselemente des Flüssigkeitskreiskreislaufes genutzt. Entweder direkt auf dem Deckel oder in den auf den Deckel aufgeschraubten, mit O - Ringen gedichteten Flanschen sind Ventile, Pumpen, festverrohrte Flüssigkeitsleitungen und Druckluftleitungen und die erforderlichen Sensoren für p_{H} - Wert, Flüssigkeitsniveau, Temperatur und Leckwarnung montiert.

Im Bereich der Ecke des Gefäßes (10), die durch die ebenen seitlichen Flächen des Zylindersegmentes gebildet wird, ist ein zylindrisches Bauteil A (26) in den Deckel (11) eingesetzt. Dieses Bauteil A (26) kann dabei in den Deckel (11) des Gefäßes (10) eingeschweißt oder mit Hilfe eines Flansches fest angeschraubt und gedichtet sein. Das Bauteil A (26) ist mit Hilfe einer Überwurfmutter (32) mit einem ebenfalls zylindrischen Bauteil B (30), welches seinerseits mit dem Gestell (1) fest verschraubt ist, mit Hilfe einer Überwurfmutter (32) zu einer Baugruppe verbunden.

In den beiden Bauteilen A und B (26,30) greifen kreiszylindrische Flächen (56,57) derart ineinander, daß sie als radiale Gleitlager für eine Drehung des Gefäßes (10) um die Drehachse (41) besagter zylindrischer Bauteile wirken. In den bzw. an den Bauteilen A und B (26,30) sind Bohrungen (60,61), Ausdrehungen (59), O - Ring - Dichtungen (58) und Anschlüsse (36 bis 40) für Flüssigkeitsleitungen derart ausgeführt, daß mehrere Flüssigkeiten, vorzugsweise drei, mit Drücken bis zu 8 bar durch die besagten Bauteile geführt werden können.

Für die durch die Bauteile A und B geführten Flüssigkeiten wird es so möglich, sie im Gestell (1) und auf dem Deckel (11) in möglichst kurz und starrverlegten Leitungen zu verteilen. Lange, das Herausschwenken ermöglichende, aber die Servicearbeiten behindernde, flexible Leitungen werden also vermieden.

Mit Hilfe der Bauteile A und B (26,30) ist es möglich das Gefäß (10) mit den Funktionselementen um die Achse der Bauteile A und B aus dem Gestell (1) herauszuschwenken. Am Flüssigkeitskreislauf (4) können, praktisch frei zugänglich, Servicearbeiten durchgeführt werden. Die Zugänglichkeit ist umso günstiger je weiter in der Ecke des Gefäßes (10) die Bauteile A und B und damit die Drehachse (41) angeordnet ist, d.h. je vollständiger sich in Konsequenz der Flüssigkeitskreislauf (4) aus dem Gestell (10) schwenken läßt.

Da das Bauteil A (26) in den Deckel (11) verschweißt oder dicht angeschraubt ist, kann mindestens eine durch die zylindrischen Bauteile A und B geführte Flüssigkeit durch die Bohrung (61) direkt in das Gefäß (10) für die Waschflüssigkeit geleitet werden. Für diese Flüssigkeit ist weder eine flexible noch eine feste Leitung nach dem Bauteil A (26) erforderlich. Entsprechend der Funktionsweise des Flüssigkeitskreislaufes (4) wird dies vorzugsweise für das in das Gefäß (10) zuzuführende Frischwasser genutzt.

Von den drei Flüssigkeiten, die getrennt durch die Bauteile A und B (26,30) geführt werden, können zwei mit Hilfe der seitlichen Anschlüsse (39,40) und fest verrohrten Leitungen von diesen Anschlüssen zu Durchführungen in den Flanschen (19) auch bei Drehung des Flüssigkeitskreislaufes (4) ohne flexible Leitungen in den bzw. aus dem Gefäß (10) für die Waschflüssigkeit geleitet werden.

Bei der Führung von nur drei unter Druck stehenden Flüssigkeiten durch die Bauteile A und B (26,30) müssen für die Funktion des Flüssigkeitskreislaufes (4) noch mindestens zwei Flüssigkeiten, allerdings nur drucklos, mit Hilfe von flexiblen Leitungen in das Gefäß (10) geführt werden. Dies sind zweckmäßigerweise die rückfließende Waschflüssigkeit und die in das Gefäß (10) zu dosierenden Chemikalien.

Da bei der Führung von drei Flüssigkeiten durch die Baugruppe aus den Bauteilen A und B (26,30) bereits alle unter Druck stehenden Flüssigkeitsleitungen fest und kurz verlegt werden können und damit die Zahl der flexiblen Leitungen und Schnellverschlüsse stark eingeschränkt ist, ist die Möglichkeit des Eintretens von Undichtigkeiten und Gefährdungen der Funktion des Flüssigkeitskreislaufes (4) bei der Ausführung von Servicearbeiten in herausgedrehter Position drastisch reduziert.

Mit den beschriebenen Lehren zur Ausgestaltung der Baugruppe aus zwei zylindrischen Bauteilen A und B ist es auch möglich, mehr als drei Flüssigkeiten durch eine solche Baugruppe zu führen und damit in Konsequenz für alle zum Betrieb erforderlichen Flüssigkeiten für die notwendigen Leitungen bei Drehung des Flüssigkeitskreislaufes (4) um die Drehachse (41) keine flexiblen Leitungsführungen mehr zu benötigen.

Wenn z.B. die Dosierung der Chemikalien unter Druck erfolgt, dann wird es aus Sicherheitsgründen geradezu notwendig, flexible Leitungen und Schnellverschlüsse auch für eine vierte Flüssigkeit zu vermeiden. Diese Forderung ist mit einer entsprechend gestalteten Baugruppe mit zwei zylindrischen Bauteilen für vier getrennt durch die Baugruppe zu führenden Flüssigkeit zu erfüllen.

Zweckmäßigerweise werden die in den Bauteilen A und B befindlichen Verbindungen, Anschlüsse, Bohrungen bzw. Ausdrehungen derart gestaltet, dass die unter dem höchsten Druck stehende Flüssigkeit durch die Bohrung (60), die im Zentrum liegt, geführt wird.

Darüber hinaus kann das Bauteil B zweckmäßigerweise zusätzlich als Gehäuse für ein in der Leitung für die Waschflüssigkeit in den Vorlauf ohnehin erforderliches Filter dienen. Dazu wird in die Bohrung (62) ein Filter (63) eingesetzt. Die Bohrung (62) ist derart ausgeführt, daß sie eine Verbindung zu einer der besagten Ausdrehungen (59) im Bauteil B (30) herstellt. Auf diese Weise ist das in die Bohrung (62) eingesetzte Filter für die durch das Bauteil B (30) fließende Waschflüssigkeit wirksam. Die Bohrung (62) ist durch einen schraubbaren Deckel (64) mit einer Dichtung abgeschlossen.

Am Boden des Gefäßes (10) sind mindestens eine, vorzugsweise zwei Rollen (43) mit Hilfe von Halterungen (44) angebracht, deren Achsen in Richtung der Drehachse (41) angeordnet sind. Durch die Anordnung der Achsen der Rollen (43) wird ein leichtes Herausdrehen des Flüssigkeitskreislaufes (4) aus dem Gestell (1) gewährleistet. Die Rollen nehmen Momente gegenüber der durch die Bauteile A und B fixierten Drehachse auf, entlasten damit die Axiallager in den besagten Bauteilen.

In der Richtung der durch besagte Bauteile fixierten Drehachse (41) ist zwischen dem Boden des Gefäßes (10) und dem Gestell (1) ein Axiallager (42) angeordnet. Im einfachsten Fall reichen zu diesem Zweck bereits zwei am Gefäß (10) und am Gestell (1) befestigte Platten aus einem gleitfähigen Material, z.B. Teflon oder ein Kugellager aus. Das Axiallager (42) entlastet die Verschraubung der Bauteile A und B durch die Überwurfmutter (32) von dem Gewicht des mit Waschflüssigkeit gefüllten Gefäßes (10) und dem Gewicht der darauf montierten Funktionselemente, z.B. Pumpen und Ventile.

In einem Teil des Umfanges des doppelwandigen Gefäßes, vorzugsweise auf einer Länge von weniger als 10 cm beträgt der Abstand (12) zwischen der Außenwand (13) und der Innenwand (14) mehrere cm. In diesem Bereich (15) ist im Deckel (11) ein Flansch (19), durch den ein Absaugrohr (16), ein Niveausensor (17) und ein Leckwarnsensor (18) eingeführt wird. Die genannten Elemente werden für Sicherheitsfunktionen für das doppelwandige Gefäße (10) genutzt.

Die Erfindung wird in Form eines Ausführungsbeispiels anhand der Zeichnungen näher erläutert.
Es stellen dar:

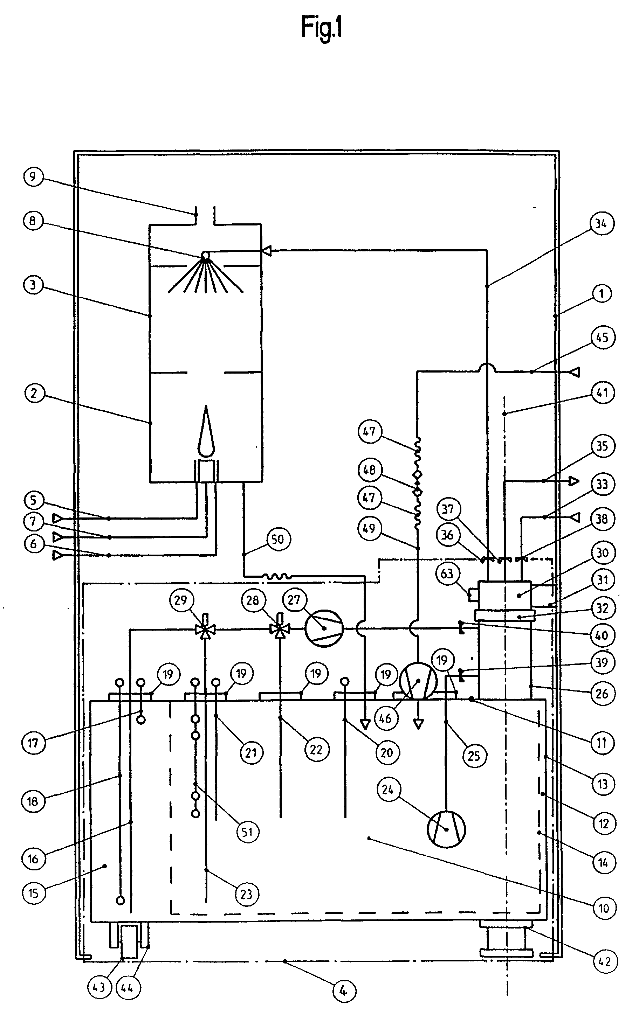

- Fig. 1: das Schema einer Einrichtung zur Realisierung eines Flüssigkeitskreislaufes in einem Gestell zusammen mit einer Brennkammer und einer Waschstrecke
- Fig. 2: eine schematische Draufsicht auf das Gefäß für die Waschflüssigkeit (im Gestell und im herausgedrehten Zustand)
- Fig. 3: einen schematischen Schnitt durch die Baugruppe aus den Bauteilen A und B

In einem Gestell (1) sind Baugruppen einer Gasreinigungseinrichtung nämlich die Brennkammer (2), die Waschstrecke (3) und der Flüssigkeitskreislauf (4) für die Waschflüssigkeit angeordnet. Der Brennkammer (2) wird durch die Leitungen (5) und (6) Wasserstoff und Sauerstoff für den Betrieb des Brenners zugeführt. In die Flamme des Brenners in der Brennkammer (2) wird das durch die Leitung (7) zugeführte Abgas geleitet, das unter anderem Tetrafluormethan enthält, wenn es aus einer plasmachemischen Ätzanlage herrührt, wie sie bei der Herstellung mikroelektronischer Schaltkreise verwendet wird. Nach der Brennkammer (2) enthält das viele hundert Grad heiße Abgas als wesentlichstes schädliches Sekundärprodukt HF . In der Waschstrecke (3) werden die heißen Abgase mit Hilfe einer Sprüheinrichtung (8) durch die Waschflüssigkeit abgekühlt, hydrolisiert und neutralisiert. Die Waschflüssigkeit besteht für die im Beispiel angeführte Aufgabe aus einer 1,5%-igen Natronlauge. Im Ergebnis der Neutralisation entsteht NaF und SiO² und wird mit der Waschflüssigkeit zunächst aus der Waschstrecke (3) geschwemmt. Das gereinigte Abgas gelangt durch die Leitung für das gereinigte Abgas (9) in die Abluft.

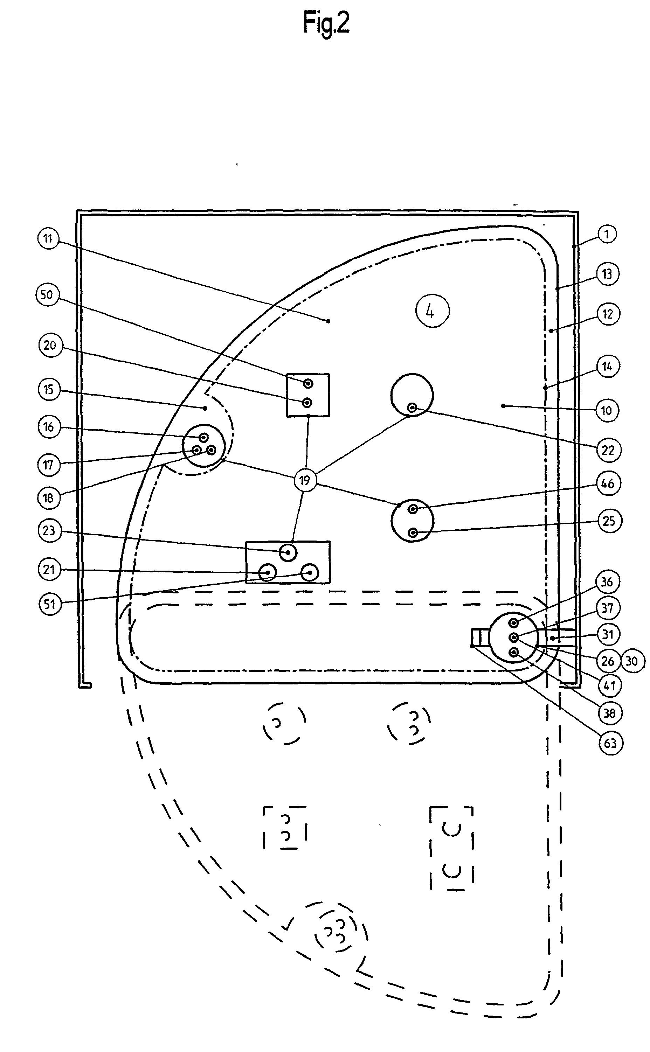

Das Gefäß (10) für die Waschflüssigkeit besteht aus zwei tiefgezogenen, ineinanderpassenden Wannen aus Polypropylen in Form von 90° - Kreiszylindersegmenten mit einem Radius von 80 cm. Die Stirnkanten der beiden Wannen sind mit dem Deckel (11) dicht verschweißt. Der Abstand (12) der Außenwand (13) und der Innenwand (14) der beiden Wannen beträgt 0,8 cm mit Ausnahme des Bereiches (15) (vergleiche auch Fig. 2 ) in dem ein Absaugrohr (16), ein Niveausensor (17) und der Leckwarnsensor (18) in den Abstand (12) zwischen Außenwand (13) und Innenwand (14) eintauchen. Dort beträgt der Abstand (12) örtlich begrenzt etwa 6 cm. Das Volumen des inneren Behälters (des eigentlichen Behälters für die Waschflüssigkeit) des Gefäßes (10) beträgt 54 Liter, das Volumen des äußeren Behälters (dem Sicherheitsgefäß) beträgt 64 Liter. Im Deckel (11) verschließen Flansche (19) Bohrungen und dienen zur Durchführung von Funktionselementen (p_{H} - Sensor (20), Niveausensoren (17,51), Temperatursensor (21), Leckwarnsensor (18) und Absaugrohren (16, 22,23). Einer der Flansche (19) dient dem Einbau der Tauchpumpe (24) und der Durchführung des Rohres (25) für die Leitung der Waschflüssigkeit zunächst in das Bauteil A (26).

Der Deckel (11) und die Flansche (19) dienen außerdem für die Montage der Membransaugpumpe (27) für das Abwasser und der Montage der pneumatischen Ventile (28,29) sowie fest verrohrter Flüsigkeitsleitungen und der Druckluftleitungen zur Betätigung der Ventile.

In der Ecke des Deckels (11) des Gefäßes (10) ist das Bauteil A (26) mit einem Durchmesser von 15 cm dicht eingeschweißt. Das Bauteil B (30) ist mit Hilfe der Halterung (31) fest mit dem Gestell (1) verschraubt. Die Bauteile A und B sind mit der Überwurfmutter (32) lösbar verbunden. Die im Wesentlichen aus Bauteil A, Bauteil B und der Überwurfmutter (32) bestehende Baugruppe dient einerseits der Durchführung von drei unter Druck stehenden Flüssigkeiten, nämlich des Frischwassers, der Waschflüssigkeit und des Abwassers. Die Leitungen (33,34,35) für die genannten Flüssigkeiten sind innerhalb des Gestells (1) fest verrohrt und mittels der Anschlüsse (36,37,38) an das Bauteil B angeschlossen. Die Leitungen für die Waschflüssigkeit und das Abwasser zwischen Bauteil A und den Funktionselementen auf dem Deckel (11) bzw. den Flanschen (19) sind ebenfalls fest verrohrt und mittels Anschlüssen (39,40) an das Bauteil A angeschlossen.

Die mit der Waschflüssigkeit aus der Waschstrecke weggespülten festen Teilchen und die im Ergebnis der Neutralisation ausgefällten Schlämme werden in einem bestimmten, im Inneren getrennten Bereich des Gefäßes (10) abgeschieden und mit einer bestimmten Menge Abwasser durch ein Absaugrohr (22) mit Hilfe einer Membransaugpumpe (27) abgesaugt und über eine Leitung und den Anschluß (40) durch die Bauteile A und B (26,30) geleitet. Mit Hilfe der Absaugrohre (23,16) im Gefäß (10) bzw. im Abstand (12) zwischen der Doppelwandung (13,14) kann bei Reinigung des Gefäßes (10) oder bei einer Havarie unter Nutzung entsprechender Ventile (28,29) der Anschluß (40) auch genutzt werden, um Abwasser durch die Bauteile A und B (26,30) abzuleiten.

In seiner zweiten Hauptfunktion dient besagte Baugruppe, bestehend aus den Bauteilen A und B und der Überwurfmutter (32), zum Herausschwenken des Flüssigkeitskreislaufes (4) aus dem Gestell (1) durch Drehen um die Drehachse (41). Zur Erleichterung des Herausdrehens des Flüssigkeitsbehälters (4) aus dem Gestell (1) zur Ausführung von Wartungsarbeiten sind am Boden des Flüssigkeitsbehälters (10) ein Axiallager (42) und zwei Rollen (43) positioniert. In Übereinstimmung mit der auszuführenden Drehung sind die Achsen der Halterung (44) der Rollen (43) auf die Drehachse (41) ausgerichtet.

Die Dosierung der 1,5%-igen Natronlauge erfolgt über die Leitung (45) mit Hilfe der Dosierpumpe (46), eine flexible Leitung (47), den Schnellverschluß (48), die feste Leitung (49) und durch einen der Flansche (19) in das Gefäß (10). Der Rücklauf der Waschflüssigkeit aus der Waschstrecke (3) erfolgt über die flexible Leitung (50) und durch einen der Flansche (19) in das Gefäß (10).

Fig.2 zeigt schematisch die Anordnung des Gefäßes (10) des Flüssigkeitskreislaufes (4) innerhalb des Gestells (1) der Gasreinigungseinrichtung. In der Fig. 2 ist auch die Lage des Gefäßes (10) im um 90° aus dem Gestell zu Wartungszwecken herausgedrehten Zustand skizziert. Beim Herausdrehen des Flüssigkeitskreislaufes (4) um die durch die Bauteile A und B (26,30) fixierte Drehachse (41) bleiben alle Leitungen für das Frischwasser, für die Waschflüssigkeit und für das Abwasser in ihrer Lage vollkommen unverändert; beim Drehen werden keine Kräfte auf sie ausgeübt.

Im vollständig herausgedrehten Zustand ist das Gefäß (10) weitgehend außerhalb des Gestells (1). Damit sind die auf den Flanschen (19) und dem Deckel (11) montierten Funktions- und Bauelemente leicht zugänglich. Da die drei unter Druck stehenden Flüssigkeitsleitungen auf dem Deckel (11) fest verrohrt sind, behindern die restlichen zwei drucklosen und flexiblen Leitungen Servicearbeiten nicht.

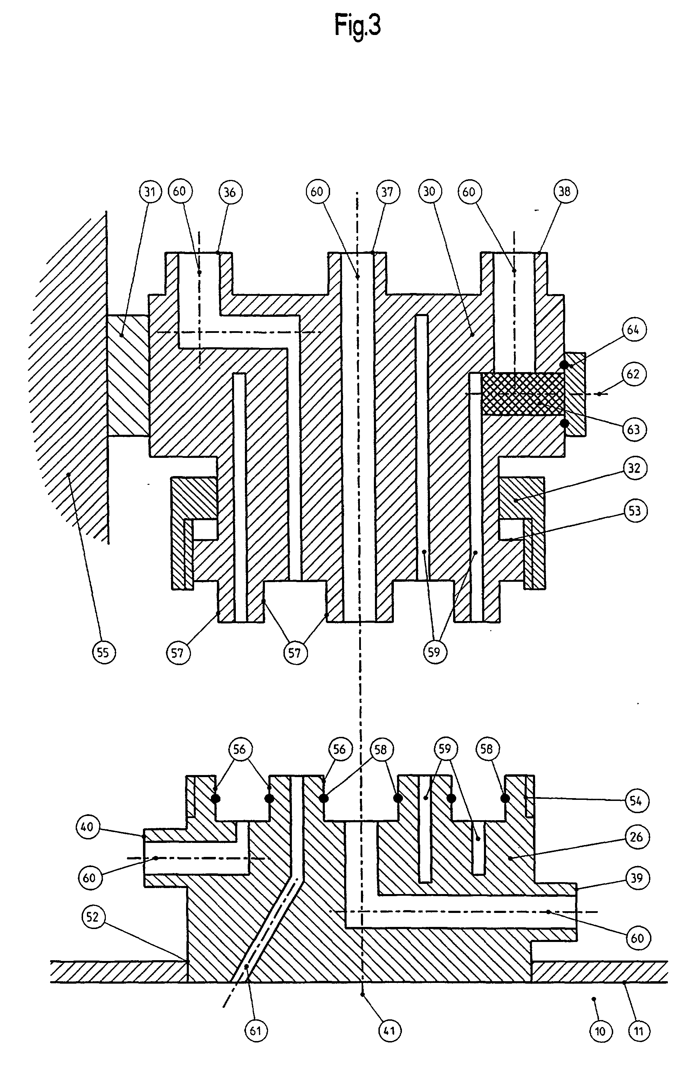

Die beiden in Fig. 3 dargestellten zylindrischen Bauteile A und B (26,30) sind aus Polypropylen und Polyethylen hergestellt. Das Bauteil B (30) ist mit Hilfe der Halterung (31) an dem Gestellteil (55) des Gestells (1) befestigt. Das Bauteil A (26) ist durch eine Schweißung (52) fest und dicht mit dem Deckel (11) des Gefäßes (10) des Flüssigkeitskreislaufes (4) verbunden. Durch die Überwurfmutter (32) und mit Hilfe des Ansatzes (53) an Bauteil B sowie des Gewindes (54) an Bauteil A (26) sind die Bauteile A und B verbunden. Die Überwurfmutter ist nur soweit verschraubt, dass ein Spalt zwischen dem Ansatz (53) des Bauteils B und dem Bauteil A die Drehung des Gefäßes (10) um die Drehachse (41) gewährleistet.

Im verbundenen Zustand passen die zylindrischen Flächen (57) am Bauteil B derart in die zylindrischen Flächen (56) im Bauteil A, dass die drei O-Ringe (58), die in dem Bauteil A eingearbeiteten Nuten eingesetzt sind, besagte Flächen abdichten. Die besagten zylindrischen Flächen stellen zusammen mit den O - Ringen die Gleitfächen für eine radiale Lagerung dar, mit deren Hilfe das Gefäß (10) und damit der Flüssigkeitskreislauf (4) um die Drehachse (41) gedreht und damit aus dem Gestell (1) herausgeschwenkt werden kann.

In den Bauteilen A und B wird durch die Ausdrehungen (59) und Bohrungen (60,61,62) gewährleistet, daß drei Flüssigkeiten getrennt voneinander durch die Baugruppe geleitet werden können. An den drei Anschlüssen (36,37,38) am Bauteil B erfolgen die Verbindungen für die im Gestell (1) fest verlegten Leitungen für das Frischwasser, das Abwasser und die Waschflüssigkeit. An den zwei Anschlüssen (39,40) am Bauteil A erfolgen die Verbindungen für die auf dem Deckel (11) des Gefäßes (10) fest verlegten Leitungen für das Abwasser und die Waschflüssigkeit. Das Frischwasser fließt durch die Bohrung (61) direkt in das Gefäß (10) für die Waschflüssigkeit.

Im Bauteil B ist in einer seitlichen Bohrung (62) ein Filter (63) eingesetzt. Die Bohrung (62) ist durch einen eingeschraubten Deckel (63) mit einem O - Ring gedichtet. Da die seitliche Bohrung (62) ein Verbindung zwischen einer Ausdrehung (59) und einer Bohrung (60) für die Waschflüssigkeit herstellt, fließt diese durch das Filter (63) in den Vorlauf der Waschstrecke (3).

## Patentansprüche

1. Einrichtung zur Realisierung eines Flüssigkeitskreislaufes (4) für die Waschstrecke (3) eines Reaktors zur Ausführung chemischer Prozesse, vorzugsweise einer Brennkammer (2) für die Reinigung schadstoffhaltiger Abgase, zur Beseitigung fester und flüchtiger, schädlicher Sekundärprodukte mit einem Gefäß (10) für die Waschflüssigkeit, einer Tauchpumpe (24) für die Umwälzung der Waschflüssigkeit über Vorlauf und Rücklauf der Waschstrecke, mit einem Wärmetauscher zur Kühlung der Waschflüssigkeit, mit einer Dosierpumpe (46) zur Dosierung der Chemikalien für den Waschprozeß, mit einer Frischwasserzufuhr und mit einer Absaugung für das Abwasser und mit einem Gestell (1), **dadurch gekennzeichnet, dass** der Flüssigkeitskreislauf (4) für die Waschflüssigkeit aus einem doppelwandigem Gefäß (10) in Form eines Zylindersegmentes ausgeführt ist, dass in diesem Gefäß (10) im Deckel (11) im Bereich der Ecke, die durch die ebenen Flächen des Kreiszylindersegmentes gebildet ist, eine Baugruppe aus den zylindrischen Bauteilen A (26) und B (30) eingesetzt ist, dass für die besagte Baugruppe an den beiden Bauteilen A (26) und B (30) zylindrische Flächen (56,57) derart ineinander stecken, dass sie als radiale Gleitlager für eine Drehung des Gefäßes (10) um die Drehachse (41) besagter zylindrischer Bauteile wirken, dass in den bzw. an den Bauteilen A (26) und B (30) besagter Baugruppe Bohrungen (60,61,62), Ausdrehungen (59), O - Ring - Dichtungen (58) und Anschlüsse (36 bis 40) für Flüssigkeitsleitungen (33,34,35) derart ausgeführt sind, dass mehrere Flüssigkeiten durch die besagte Baugruppe geführt werden können und dass das Gestell (1) mit dem Bauteil B (30) verschraubt ist.

2. Einrichtung nach Anspruch 1, **dadurch gekennzeichnet, dass** die oberen Stirnkanten beider Wandungen (13,14) mit dem Deckel (11) zu dem allseitig geschlossenen Gefäß (10) verschweisst sind.

3. Einrichtung nach Anspruch 1 und 2, **dadurch gekennzeichnet, dass** der Winkel des Kreiszylindersegmentes des allseitig geschlossenen doppelwandigen Gefäßes (10) einen Wert von 60° bis 90°, vorzugsweise einen Wert von 90°, hat.

4. Einrichtung nach Anspruch 1 bis 3, **dadurch gekennzeichnet, dass** am Boden des Gefäßes (10) in einer oder mehreren Halterungen (44) ein oder mehrere Rollen (43) angeordnet sind, deren Achsen in Richtung der Drehachse (41) des Gefäßes (10) weisen.

5. Einrichtung nach Anspruch 1 bis 4, **dadurch gekennzeichnet, daß** am Boden des Gefäßes (10) koaxial zur durch die Bauteile A (26) und B (30) vorgegebenen Drehachse (41) ein Axiallager (42) angeordnet ist.

6. Einrichtung nach Anspruch 1 bis 5, **dadurch gekennzeichnet, dass** die Wandungen (13) und (14) auf dem größten Teil des Umfanges einen geringen Abstand in der Größenordnung von einem Zentimeter haben.

7. Einrichtung nach Anspruch 1 bis 6, **dadurch gekennzeichnet, dass** auf einem Teil des Umfanges des Gefäßes (10), vorzugsweise auf einer Länge von weniger als 10 Zentimeter, der Abstand (12) zwischen der Außenwand (13) und der Innenwand (14) mehrere Zentimeter beträgt.

8. Einrichtung nach Anspruch 1 bis 7, **dadurch gekennzeichnet, daß** im Deckel (11) des allseitig geschlossenen Gefäßes (10) ein Absaugrohr (16), ein Niveausensor (17) und ein Leckwarnsensor (18) in den Abstand (12) zwischen der Außenwand (13) und der Innenwand (14) im Bereich, in dem der Abstand mehrere Zentimeter beträgt, eingeführt wird.

9. Einrichtung nach Anspruch 1 bis 8, **dadurch gekennzeichnet, dass** die Bauteile A (26) und B(30) durch die Überwurfmutter (32) zu einer Baugruppe zusammengehalten sind.

10. Einrichtung nach Anspruch 1 bis 9, **dadurch gekennzeichnet, dass** in das zylindrische Bauteil B (30) in eine Bohrung (62) ein Filter (63) eingesetzt ist.

## Claims

1. An apparatus for realizing a liquid cycle (4) for the washing section (3) of a reactor for chemical-process implementation, preferably a combustion chamber (2) for noxious waste gas purification, for the elimination of solid and volatile secondary products, comprising a vessel (10) for the washing liquid; a submerged pump (24) for washing-liquid recirculation via washing-section flow and return; a heat exchanger for cooling the washing liquid; a dosing pump (46) for dosing the chemicals for the washing process; fresh-water supply and waste-water suction implements; and a frame (1); **characterized in that** the liquid cycle (4) for the washing liquid includes a double-walled vessel (10) in the form of a segment of a cylinder; **in that** an assembly of cylindrical components A (26) and B (30) is inserted in this vessel (10) in the cover (11) in the vicinity of the comer that is formed by the plane surfaces of the segment of a circular cylinder; **in that**, for said assembly, cylindrical surfaces (56, 57) on both components A (26) and B (30) are fitted together in such a way that they work as radial slide bearings for rotation of the vessel (10) about the axis of rotation (41) of said cylindrical components; **in that** drilled holes (60, 61, 62), bores (59), O-ring seals (58) and connectors (36 to 40) for liquid ducts (33, 34, 35) are executed in or on the components A (26) and B (30) of said assembly in such a way that several liquids can be led through said assembly; and **in that** the frame (1) and the component B (30) are screwed together.

2. An apparatus according to claim 1, **characterized in that** the top frontal edges of both walls (13, 14) and the cover (11) are welded together, forming a vessel (10) that is closed on all sides.

3. An apparatus according to claim 1 and 2, **characterized in that** the angle of the segment of a circular cylinder of the double-walled vessel (10) that is closed on all sides is in the range of 60° to 90°, preferably 90°.

4. An apparatus according to claim 1 to 3, **characterized in that** one or several rolls (43) are disposed in one or several fixtures (44) on the bottom of the vessel (10), the axes of the rolls (43) pointing in the direction of the axis of rotation (41) of the vessel (10).

5. An apparatus according to claim 1 to 4, **characterized in that** a thrust bearing (42) is disposed on the bottom of the vessel (10) coaxially of the axis of rotation (41) given by the components A (26) and B (30).

6. An apparatus according to claim 1 to 5, **characterized in that** the walls (13) and (14), for most of the circumference, have a minor distance from each other in the range of a centimeter.

7. An apparatus according to claim 1 to 6, **characterized in that,** along part of the circumference of the vessel (10), preferably for a length of less than 10 centimeters, the distance (12) between the outside wall (13) and the inside wall (14) amounts to several centimeters.

8. An apparatus according to claim 1 to 7, **characterized in that,** in the cover (11) of the vessel (10) that is closed on all sides, a suction pipe (16), a level sensor (17) and a leakage warning sensor (18) are inserted into the distance (12) between the outside wall (13) and the inside wall (14) in the area where the distance is in the range of several centimeters.

9. An apparatus according to claim 1 to 8, **characterized in that** the components A (26) and B (30) are fitted together by the union nut (32), forming an assembly.

10. An apparatus according to claim 1 to 9, **characterized in that** a filter (63) is inserted into a drilled hole (62) in the cylindrical component B (30).

## Revendications

1. Dispositif pour réaliser un cycle de liquide (4) destiné à la section de lavage (3) d'un réacteur, permettant d'exécuter des processus chimiques, de préférence d'une chambre de combustion (2), pour dépolluer des gaz d'échappement contenant des éléments polluants, pour élimination des produits secondaires nocifs, volatils et solides, comportant un récipient (10) pour le liquide de lavage, une pompe submersible (24) pour le brassage du liquide de lavage, par va et vient au niveau de la section de lavage, un échangeur thermique pour le refroidissement du liquide de lavage, une pompe doseuse (46) destinée au dosage des produits chimiques pour le processus de lavage, une arrivée d'eau fraîche et une aspiration pour l'eau usée ainsi qu'un support (1), **caractérisé en ce que** le cycle de liquide (4) pour le liquide de lavage provenant d'un récipient à double paroi (10) est réalisé sous forme d'un segment cylindrique, **en ce qu'**un sous-groupe, constitué des composants cylindriques A (26) et B (30), est mis en place dans ce récipient (10), dans le couvercle (11), dans la zone de l'angle, formé par les surfaces planes du segment cylindrique circulaire, **en ce que** des surfaces cylindriques (56, 57) sont emboîtées l'une dans l'autre pour ledit sous-groupe au niveau des deux composants A (26) et B (30) de telle sorte qu'elles opèrent en tant que palier-glisseur radial pour une rotation du récipient (10) autour de l'axe de rotation (41) desdits composants cylindriques, **en ce que** dans ou plus précisément au niveau des composants A (26) et B (30) dudit sous-groupe, des orifices (60, 61, 62), des alésages (59), des joints toriques d'étanchéité (58) et des raccords (36 à 40) sont réalisés pour des conduites de liquides (33, 34, 35) de telle manière que plusieurs liquides puissent traverser ledit sous-groupe et **en ce que** le support (1) soit vissé au composant B (30).

2. Dispositif selon la revendication 1, **caractérisé en ce que** les arêtes frontales supérieures des deux pàrois (13, 14) sont soudées avec le couvercle (11) au récipient fermé de tout côté (10).

3. Dispositif selon les revendications 1 et 2, **caractérisé en ce que** l'angle du segment cylindrique circulaire du récipient à double paroi, fermé de tout côté (10), présente une valeur comprise entre 60° et 90°, de préférence une valeur de 90°.

4. Dispositif selon les revendications 1 à 3, **caractérisé en ce qu'**est/sont disposé(s), au niveau du fond du récipient (10), dans une ou plusieurs fixations (44), un ou plusieurs rouleau(x) (43) dont les axes courent dans la direction de l'axe de rotation (41) du récipient (10).

5. Dispositif selon les revendications 1 à 4, **caractérisé en ce qu'**est disposé, au niveau du fond du récipient (10), coaxialement à l'axe de rotation (41) défini par les composants A (26) et B (30), un palier axial (42).

6. Dispositif selon les revendications 1 à 5, **caractérisé en ce que** les parois (13) et (14) présentent sur la majeure partie de l'étendue un faible espacement, de l'ordre d'un centimètre.

7. Dispositif selon les revendications 1 à 6, **caractérisé en ce que**, sur une partie de l'étendue du récipient (10), de préférence sur une longueur inférieure à 10 centimètres, l'espacement (12) entre la paroi extérieure (13) et la paroi intérieure (14) mesure plusieurs centimètres.

8. Dispositif selon les revendications 1 à 7, **caractérisé en ce que** dans le couvercle (11) du récipient fermé de tout côté (10), un tube d'aspiration (16), une jauge (17) et un détecteur avertisseur de fuite (18) sont introduits dans l'espacement (12) entre la paroi extérieure (13) et la paroi intérieure (14), dans la zone dans laquelle l'espacement est de plusieurs centimètres.

9. Dispositif selon les revendications 1 à 8, **caractérisé en ce que** les composants A (26) et B (30) sont tenus par l'écrou de couplage (32) à un sous-groupe.

10. Dispositif selon les revendications 1 à 9, **caractérisé en ce qu'**est mis en place un filtre (63), dans le composant cylindrique B (30), dans un orifice (62).
